# EUROPEAN PATENT SPECIFICATION

(11) **EP 3 183 917 B1**
(45) Date of publication and mention of the grant of the patent: **25.07.2018**
(21) Application number: 14758967.5
(22) Date of filing: 05.09.2014
(51) Int. Cl.: H04W 52/36

(54) **BASE STATION CONTROLLER FOR CONTROLLING A RADIO FREQUENCY EMISSION OF AT LEAST ONE ANTENNA OF A BASE STATION**
BASISSTATIONSSTEUERGERÄT ZUR STEUERUNG EINER FUNKFREQUENZEMISSION VON MINDESTENS EINER ANTENNE EINER BASISSTATION
DISPOSITIF DE COMMANDE DE STATION DE BASE POUR COMMANDER UNE ÉMISSION RADIOFRÉQUENCE D'AU MOINS UNE ANTENNE D'UNE STATION DE BASE

(43) Date of publication of application: 28.06.2017
(73) Proprietor: Huawei Technologies Co., Ltd., Longgang District Shenzhen, Guangdong 518129 (CN)
(72) Inventor: SOTEK, Karel, 80992 Munich (DE); KAPADIA, Mayank, 80992 Munich (DE); LI, Jinbo, 80992 Munich (DE)
(74) Representative: Pfenning, Meinig & Partner mbB
(86) International application number: PCT/EP2014/068901
(87) International publication number: WO 2016/034244

(56) References cited:
- EP-A1- 2 071 738
- EP-A1- 2 309 590
- US-A1- 2012 021 800
- DANIEL SEBASTIA~O ET AL: "Estimation of Base Stations Exclusion Zones", VEHICULAR TECHNOLOGY CONFERENCE FALL (VTC 2010-FALL), 2010 IEEE 72ND, IEEE, PISCATAWAY, NJ, USA, 6 September 2010 (2010-09-06), pages 1-5, XP031770269, ISBN: 978-1-4244-3573-9
- MICHAEL A BALDAUF ET AL: "Safety distances underneath vertically polarized base station antennas", ELECTROMAGNETIC COMPATIBILITY, 2007. EMC ZURICH 2007. 18TH INTERNATION AL ZURICH SYMPOSIUM ON, IEEE, PI, 1 September 2007 (2007-09-01), pages 191-194, XP031164427, ISBN: 978-3-9523286-1-3
- CARLA OLIVEIRA ET AL: "Estimation of Exclusion Zones for Base Station Antennas in Wireless Communications Systems", VEHICULAR TECHNOLOGY CONFERENCE, 2007. VTC-2007 FALL. 2007 IEEE 66TH, IEEE, PI, 1 September 2007 (2007-09-01), pages 955-959, XP031147546, ISBN: 978-1-4244-0263-2

## Description

### TECHNICAL FIELD

The present invention relates to a base station controller for controlling the radio frequency emission of at least one antenna of a base station of a wireless communication system. The present invention relates further to a base station arrangement comprising a base station with the base station controller according to the invention. The present invention finally relates to a method for controlling the radio frequency emission of at least one antenna of a base station of a wireless communication system.

### BACKGROUND

In order to satisfy the high and further increasing user demand for more mobile network capacity, more and more frequency bands are added to the existing frequency bands for the transmission of data in the downlink direction in wireless communication systems. The downlink direction is the direction of data transmission from the base station to user terminals. The term "base station" is for example used in systems which operate on the basis of the Global System for Mobile Communications, GSM, standard. Here, a base station may also be called a base transceiver station, BTS. The corresponding entity in a system which operates on the basis of the Universal Mobile Telecommunications System, UMTS, standard is the Node B. However, the requirements and solutions for enhanced network capacity by adding additional frequency bands is similar in and for most wireless communication systems, specifically cellular wireless communication systems available on the market.

The addition of new frequency bands to the existing frequency bands results in an increase of the emission values of the base station. Often, the addition of further frequency bands also results in the use and implementation of additional antennas to a base station. In cellular wireless communication systems, a cell is often divided in a number of sectors, for example 3 sectors, wherein separate antennas or groups of antennas serve each sector. A base station, e.g. BTS or Node B, may be operated by one or more operators. In the later case, the base station is shared.

The emission values of the radio frequency emissions of the antennas need to be kept below certain safety limits in order to minimize the human exposure. These safety limits are set and determined by regulators in the different countries. Hereby, an Exclusion Zone, EZ, is defined, which is an area around the antennas of a base station, where people are not allowed to permanently stay. In other words, the EZ is an area surrounding the antennas of a base station, to which the access for people is blocked, for example by locked doors on rooftops, access barriers, fences, walls and the like. The most critical location for radio frequency emissions of the antennas is the border line of the respective EZ, since people are closest to the transmitting antennas of the base station in these locations. Transmit antennas used in cellular wireless communication systems normally have a high directivity. The shape of the directivity is defined by the antenna gain characteristics. Normally, manufacturers specify these characteristics by an antenna pattern diagram and in a numerical format which is called MSI data. Hereby, MSI is an extension used to define antenna gain patterns in this field.

Currently, rather simple static methods are used to calculate the maximum allowed radio frequency emissions for a base station site. Typically, worst-case assumptions are used, whereby typical calculations assume that all available frequency bands emit at their maximum operating power. Further, it is typically assumed that all antennas of the base station site are taken as a single antenna, whereby its central point is the midpoint of all the antennas and its height is the height of the lowest antenna used on the site. Then, the maximum allowed radio frequency emission for the site is calculated and set in a static way, i.e. it is set and used until any substantial change on the base station site occurs, for example a change in the sense that new frequency bands and/or new antennas are added.

The disadvantage of these prior art schemes is the low accuracy. The calculated maximum radio frequency emissions allowed for a base station and thus the low efficiency site are normally much higher than the real emissions which take place during use of the antennas. This error may typically be in a range between 6 and 10 dB.

US 2012/0021800 A1 discusses a scheme for radiation power level control for a wireless user equipment device, wherein a power data history of the device is tracked and a time-average transmission power level is computed.

EP 2 309 590 A1 discusses a transmit frontend for a base station comprising a plurality of active antennas for transmitting RF signals and a plurality of measurement antennas for receiving a respective one of the RF signals, and a feedback path for providing a feedback signal.

EP 2 071 738 A1 discusses a method for adjusting transmission power of pilot signals from a picocell base station for radio communications to a user terminal, wherein the user terminal measures the signal received from the base station and sends an information signal indicating the received signal level; and the base station adjusts its pilot signal power accordingly.

Safety distances around base stations are furthermore the subject of Sebastiao et al: "Estimation of Base Staions Exclusion Zones", in 72nd IEEE Vehicular Technology Conference; Baldauf et al: "Safety Distances Underneath Vertically Polarized Base Station Antennas", in 18th IEEE Symposium on Electromagnetic Compatibility; and Oliveira et al: "Estimation of Exclusion Zones for Base Station Antennas in Wireless Communications Systems", in 66th IEEE Conference on Vehicular Technology.

### SUMMARY

The invention is set out in the appended set of claims. The further examples called embodiments or aspects in the description are illustrative examples and not embodiments claimed in the present application.

In view of the above discussed disadvantages and problems, the present invention aims to improve the state of the art. In particular, the object of the present invention is to provide a base station controller, a base station arrangement and a method which provide an improvement in the determination of the maximum radio frequency emissions of antennas of a base station in a wireless communication system.

The above-mentioned object of the present invention is achieved by the solution provided in the enclosed independent claims 1, 9 and 11. Advantageous implementations of the invention are further defined in the respective dependent claims.

A first aspect of the invention provides a base station controller for controlling the radio frequency emission of at least one antenna of a base station of a wireless communication system, comprising an obtaining unit configured to obtain a current emission value of the radio frequency emission of the at least one antenna, and a control unit configured to control the radio frequency emission of the at least one antenna on the basis of the obtained current emission value.

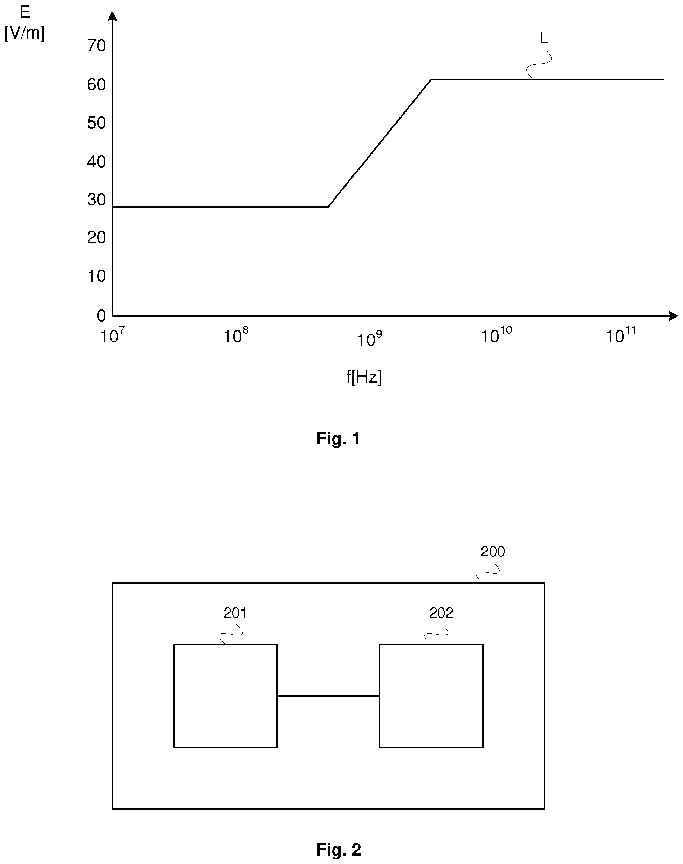

As mentioned, the respective country regulators specify the maximum emission masks to be used by antennas in a cellular wireless communication system. Hereby, many countries follow the European Commission recommendation, which is shown in Figure 1. Figure 1 shows the maximum value in form of a line L of the radio frequency emission E over the frequency f. It can be seen, that the allowed maximum radio frequency emission E (≙ electric field strength) is frequency dependent. The maximum allowed emission is constant up to about 800 Mhz, increases linearly up to about 2,5 GHz and is then constant again.

By obtaining a current emission value of the radio frequency emission of the at least one antenna, and by controlling the radio frequency emission of the at least one antenna on the basis of the obtained current emission value, it is possible to dynamically control the radio frequency emission of the base station in an adaptive manner. Thus, in contrary to the static solutions provided in the prior art, the present invention enables a flexible and accurate adaption of the radio frequency emission of the antennas of a base station in order to provide the maximum possible network capacity, specifically for the transition of the data in downlink direction, i.e. from the base station to user terminals.

In a first implementation form of the base station controller according to the first aspect, the controlling unit is configured to compare the obtained current emission value with a maximum emission limit value, and to reduce the radio frequency emission of the at least one antenna if the obtained current emission value is equal to or larger than the maximum emission limit value. Hereby, a flexible adaptation of the radio frequency emission is achieved by, at the same time, guaranteeing that the actual radio frequency emission is as high as possible within the allowed limits.

In a second implementation form of the base station controller according to the first aspect as such or according to the first implementation form of the first aspect, the obtaining unit is configured to obtain the emission value using all of the at least one antennas. Hereby, it is ensured that the emission values of every single antenna used by the base station are considered when obtaining the current emission value.

In a third implementation form of the base station controller according to the first aspect as such or according to any implementation forms of the first aspect, the obtaining unit is configured to obtain the current emission value using all active frequency bands used by the at least one antenna. Hereby, it is ensured that the contribution of every single active frequency band used by the antennas of the base station is considered when obtaining the current emission value.

Thus, according to the second and third implementation, for systems with multiple antennas, a superposition of the emission from each antenna can be used, and then be compared with the allowed maximum radio frequency emission value. Similarly, for systems with multiple frequency bands, a superposition of the frequency bands must be used. Normally, antenna pattern diagrams are frequency dependent. However, for small frequency deviations, this frequency dependency can be neglected and it can be considered to be constant. The superposition of the emissions for various antennas and various frequency bands can be summed and then compared to the respective maximum allowed emission values, as for example shown in Figure 1. In particular the most critical area for emissions of a single antenna can be defined by the maximum value of the product of the antenna gain multiplied with the EZ distance.

In a fourth implementation form of the base station controller according to the first aspect as such or according to any implementation forms of the first aspect, the obtaining unit comprises a calculating unit configured to calculate the current emission value based on an emission value model. This allows for a cost efficient, but still reliable and accurate calculation of the current emission value.

In a fifth implementation form of the base station controller according to the fourth implementation form of the first aspect, the calculating unit is configured to calculate radio frequency output power values on the basis of said emission value model in order to obtain said current emission value. Hereby, the emission value model allows an estimation of expected radio frequency output power values for the antennas and/or frequency bands used by the antennas of the base station, so that the obtained current emission value is as accurate as possible.

In a sixth implementation form of the base station controller according to the fifth implementation form of the first aspect, the calculating unit is configured to calculate said radio frequency output power values for each of the at least one antennas and for each active frequency band used for each of the at least one antennas, and is further configured to calculate the current emission value of the at least one antenna on the basis of the calculated radio frequency output power values. Hereby, all used antennas of the base station and all used and active frequency bands are used and considered for the calculation of the current emission value in order to obtain an accurate - as possible - calculation result.

In a seventh implementation form of the base station controller according to the sixth implementation form of the first aspect, the calculating unit is further configured to convert the calculated radio frequency output power values into electrical field strength values using antennas specific gain values for each frequency band. Hereby, the frequency dependency of the antenna patterns are is taken into consideration in an advantageous way in order to obtain a calculation result for the current emission value which is as accurate as possible.

In an eight implementation form of the base station controller according to the seventh implementation form of the first aspect, the a calculating unit is further configured to perform a weighted emission of the electric field strength values based on antenna gain values and/or antenna position values to obtain the current emission value. The weighted emission operation provides an even more accurate calculation result for the current emission value.

In a ninth implementation form of the base station controller according to the first aspect as such or according to any implementation forms of the first aspect, the calculating unit is configured to obtain said current emission value and said control unit is configured to dynamically control the radio frequency emission within a sliding time window of a given length. Hereby, the dynamic nature of the control of the radio frequency emission of the at least one antenna of the base station is presented by and defined with a sliding time window of a given length, which allows for the regular adaptation an eventual change of the radio frequency emission of the at least one antenna, thus allowing a regular, fast and effective control.

In a tenth implementation form of the base station controller according to the ninth implementation form of the first aspect, the given length of the sliding time window is equal or larger than 5 min. and smaller than or equal to 30 min. This time range is advantageous for practical implementation since it provides a good balance between a fast and quick dynamic adaptation of the radio frequency emission on the one hand and a reasonable time frame for an efficient implementation on the other hand.

In an eleventh implementation form of the base station controller according to the first aspect as such or according to any implementation forms of the first aspect, the obtaining unit is configured to receive a measured emission value of the current radio frequency emission of the at least one antenna as the current emission value. The use of a measured emission value of the current radio frequency emission provides an alternative or additional implementation to the fourth implementation form of the first aspect as discussed above. The use of a measured emission value enhances the accuracy of the obtained current omission value.

A second aspect of the present invention provides a base station arrangement comprising a base station with the base station controller according to the eleventh implementation form of the first aspect, and a measurement unit configured to measure the current radio frequency emission of the at least one antenna of the base station and to send the measured emission value to the obtaining unit.

In a first implementation form of the base station arrangement according to the second aspect, the measurement unit comprises a sensing test antenna. The use of a sensing test antenna is an advantageous and cost-efficient implementation.

A third aspect of the present invention provides a method for controlling the radio frequency emission of at least one antenna of a base station of a wireless communication system, comprising the steps of obtaining a current emission value of the radio frequency emission of the at least one antenna, and dynamically controlling the radio frequency emission of the at least one antenna on the basis of the obtained current emission value.

The advantages of the third aspect and its implementations are the same as indicated above for the corresponding apparatus features of the first and second aspect and their implementations.

In a first implementation form of the method according to the third aspect, the obtained current emission value is compared to a maximum emission limit value, and the radio frequency emission of the at least one antenna is reduced if the obtained current emission value is equal to or larger than the maximum emission limit value.

In a second implementation form of the method according to the third aspect as such or according to the first implementation form of the third aspect, the current emission value is obtained using all of the at least one antennas.

In a third implementation form of the method according to the third aspect as such or according to any implementation forms of the third aspect, the current emission value is obtained using all active frequency bands used by the at least one antenna.

In a fourth implementation form of the method according to the third aspect as such or according to any implementation forms of the third aspect, the current emission value is calculated based on an emission value model.

In a fifth implementation form of the method according to the fourth implementation form of the third aspect, radio frequency output power values are calculated on the basis of said emission value model in order to obtain said current emission value.

In a sixth implementation form of the method according to the fifth implementation form of the third aspect, said radio frequency output power values are calculated for each of the at least one antennas and for each active frequency band used for each of the at least one antennas, and the current emission value of the at least one antenna is calculated on the basis of the calculated radio frequency output power values.

In a seventh implementation form of the method according to the sixth implementation form of the third aspect, the calculated radio frequency output power values are converted into electrical field strength values using antennas specific gain values for each frequency band.

In an eight implementation form of the method according to the seventh implementation form of the third aspect, a weighted emission of the electric field strength values is performed based on antenna gain values and/or antenna position values to obtain the current emission value.

In a ninth implementation form of the method according to the third aspect as such or according to any implementation forms of the third aspect, the calculating unit is configured to obtain said current emission value is obtained and the radio frequency emission is dynamically controlled within a sliding time window of a given length.

In a tenth implementation form of the method according to the ninth implementation form of the third aspect, the given length of the sliding time window is equal or larger than 5 min. and smaller than or equal to 30 min.

In an eleventh implementation form of the method according to the third aspect as such or according to any implementation forms of the third aspect, a measured emission value of the current radio frequency emission of the at least one antenna is received as the current emission value.

It has to be noted that all devices, elements, units and means described in the present application could be implemented in software or hardware elements or any kind of combination thereof. All steps and functionalities which are performed by the various entities described in the present application are intended to mean that the respective entity is adapted to or configured to perform the respective steps and functionalities. Even if, in the following description, a specific functionality or step to be performed by entities not reflected in the description of the specific detailed element of said entity which performs said specific step or functionality, it should be clear for a skilled person that these method and functionalities can be implemented in respective and hardware elements, or any kind of combination thereof.

It is further to be understood that the various aspects and implementation forms of the present invention can be applied in any kind of wireless communication system, such as for example cellular wireless communication systems, under any kind of standard, for example (but limited to), the GSM, the UMTS, or any other standard.

### BRIEF DESCRIPTION OF DRAWINGS

The above aspects and implementation forms of the present invention will be explained in the following description of specific embodiments in relation to the enclosed drawings, in which
- Fig. 1: shows a maximum emission mask as recommended by the European Commission EC Rec. 1999/519/EC,
- Fig. 2: shows a schematic block diagram of a base station controller according to a first embodiment of the present invention,
- Fig. 3: shows a schematic flow chart of a control method according to a second embodiment of the present invention,
- Fig. 4a: shows a schematic block diagram of a base station arrangement according to a third embodiment of the present invention,
- Fig. 4b: shows a schematic block diagram of a base station arrangement according to a fourth embodiment of the present invention,
- Fig. 4c: shows a schematic block diagram of a base station arrangement according to a fifth embodiment of the present invention,
- Fig. 5: shows a maximum emission mask diagram for two operators under EC Rec. 1999/519/EC,
- Fig. 6: shows a diagram of Fig. 5 with an additional visualization of the frequency dependency,
- Fig. 7: visualizes the emission contribution of two antenna beams A and B at different locations of an EZ, and
- Fig. 8: visualizes how, in the case of Fig. 7, the emission ratio between the beams A and B influences the addition of the emission values.

### DETAILED DESCRIPTION OF EMBODIMENTS

Fig. 2 shows a schematic block diagram of a base station controller 200 according to a first embodiment of the present invention. The base station controller 200 is configured to control the radio frequency emission of at least one antenna of a base station of the wireless communication system. The wireless communication system can be any kind of cellular or non-cellular wireless communication system in which content data and/or control data are exchanged between a base station and user terminals in a wireless manner. The user terminals may be mobile or non-mobile terminals. The wireless communication system can for example be a system operating under the GSM, UMTS or any other suitable standard. The base station may thus be a BTS, a Node B, or any other central processing unit in a communication system incorporating the corresponding functionalities. The base station controller 200 according to the first embodiment of the present invention is configured to control a radio frequency emission of the antennas of the base station of the wireless communication system in the downlink direction, i.e. in the direction from the base station to the user terminals. The base station controller 200 comprises an obtaining unit 201 configured to obtain a current emission value of the radio frequency emission of the at least one antenna of the base station, and a control unit 202 configured to control the radio frequency emission of the at least one antenna of the base station on the basis of the obtained current emission value. Generally, as will be shown later, the current emission value can be obtained on the basis of a calculation based on an emission value model and/or a measured emission value.

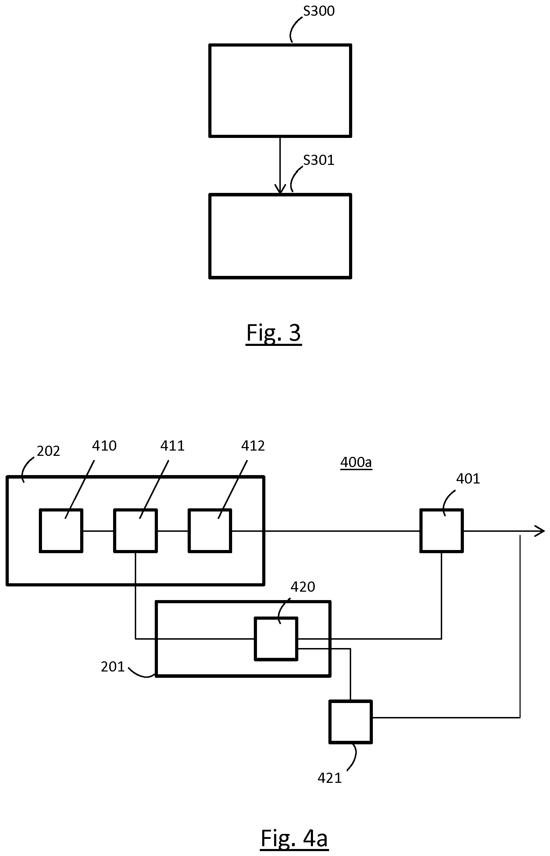

Fig. 3 shows a schematic flow chart of a method for controlling the radio frequency emission of at least one antenna of a base station of a wireless communication system according to a second embodiment of the present invention. Hereby, it has to be noted that the method of the second embodiment of the present invention as shown in Fig. 3 is the method step implementation of the functionalities of the base station controller 200, the obtaining unit 210 and the control unit 202 of the first embodiment shown in Fig. 2. All statements made above (or below) in relation to the first embodiment apply identically to the method steps of the second embodiment. The method for controlling the radio frequency emission of at least one antenna of a base station of a wireless communication system according to the second embodiment shown in Fig. 3 comprises the steps of obtaining, in a first step S300, a current emission value of the radio frequency emission of the at least one antenna, and controlling, in a second step S301, the radio frequency emission of the at least one antenna on the basis of the obtained current emission value.

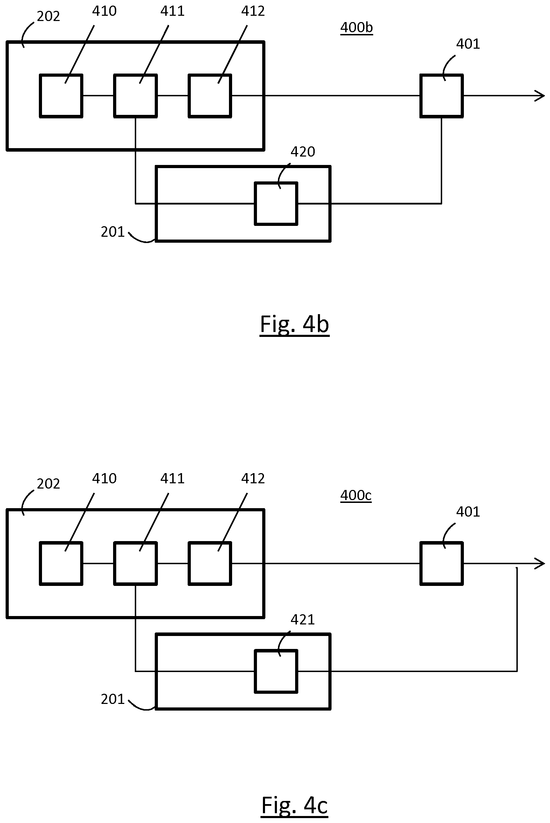

In the following description of the base station controller 200 according to the first embodiment as well as the base station arrangements 400a, b, c of the third, fourth and fifth embodiment as shown schematically in Figs. 4a, b and c, respectively, the description of the various functionalities of the various elements and units at the same time refers to the corresponding method steps comprised in the method of the second embodiment of the present invention.

Figs. 4a, 4b and 4c, respectively, show a schematic block diagram of a base station arrangement 400a, b and c according to a third, fourth and fifth embodiment, respectively, of the present invention. Hereby, the base station arrangements 400a, b and c, respectively, comprise the base station controller 200 according to the first embodiment as shown in Fig. 2, either as a unit or at least its elements, namely the obtaining unit 201 and the control unit 202, as well eventually additional units. All statements made in relation to the first embodiment equally apply to the third, fourth and fifth embodiments and vice versa. Further, the base station arrangements 400a, b and c, respectively, comprise a base station 401, which comprises or is connected to at least one antenna configured for emitting signals in the radio frequency range of the wireless communication system to the internals. The control unit 202 of the base station arrangements 400a, b and c, respectively, comprise a nominal value element 410, a comparing element 411 and a control element 412.

The nominal value element 410 provides a maximum emission limit value. This maximum emission limit value is normally pre-defined by the country regulator, it may correspond to the allowed maximum emission values is for example shown in and explained in relation to Fig. 1. As discussed, these allowed maximum emission values may be frequency dependent. The nominal value element 410 may for example be any kind of storage or memory element in which the allowed maximum emission limit values are stored or pre-set in any kind of suitable form. Also, the stored values may be shared with adjacent or co-located equipments (base stations) or operators.

The comparing element 411 is adapted to compare the maximum emission limit values obtained from the nominal value element 410 to a current emission value obtained from the obtaining unit 201. In case that the current emission value obtained from the obtaining unit 201 is equal to or larger than the maximum emission limit value obtained from the nominal value element 410, the comparing element 411 outputs a corresponding signal to the control element 412, which will then output a corresponding control signal to the base station 410 in order to cause the base station to reduce the radio frequency emission of the at least one antenna of the base station 410. Measures taken by the base station 401 to reduce the radio frequency emissions of the antennas may for example comprise (but are not limited to) a reduction of the data throughput per user terminal, a conversion of a full-rate speech connection to a half-rate speech connection, call preemption or any other suitable measure to reduce the radio frequency emission of the antennas.

In the base station arrangements 400a and 400b of the third and fourth embodiment, respectively, the base station 401 is configured to output signaling information indicating information about the reduced emission of its antennas in a control loop back to the obtaining element 201. This information is received by a calculating unit 420 comprised in the obtaining unit 201. The calculating unit 420 is adapted to calculate the current emission value based on an emission value model. The emission value model used by the calculating unit 420 may be based on any kind of suitable parameters and assumptions. For example, such parameters could include estimated radio frequency output power values of the antennas and related circuitry, taking for example into consideration antenna gains, radio frequency feeder losses, and so forth. Hereby, it is advantageous if each of the available and used antennas of the base station 401 and/or each active frequency bands used for the active antennas are taken into consideration for the estimated radio frequency output power values. The calculated radio frequency output power values could also be converted by the calculating unit 420 into electric field strength values, for example using antenna-specific gain values for each active frequency band. Hereby, the calculating unit 420 may further be configured to perform a weighted addition of the electric field strength values based on antenna gain values and/or antenna position values to obtain the current emission value.

In the fourth embodiment shown in Fig. 4b, the calculating unit 420 then outputs the calculated current emission value to the comparing element 411.In the third embodiment shown in Fig. 4a, the obtaining unit 201, is further connected to a measurement unit 421 (which could alternatively be part of the obtaining unit) configured to measure the current radio frequency emission of the at least one antenna of the base station 401. The measurement unit 421 comprises for example a sensing test antenna, which is configured to sense the current radio frequency emission of all the active antennas of the base station 401. The measured current radio frequency emission of the active antennas is output by the measurement unit 421 to the calculating unit 420, which uses these measurement results for the calculation of the current emission value in addition to the modeling parameters as mentioned above. The calculating unit 420 provides the combined result to the comparing element 411. In other words, the comparing element 411 compares the current emission value obtained on the basis of both the calculated current emission value and the measured current emission value with the maximum emission limit value output from the nominal value element 410.

The measurement unit 421 can be placed in any suitable location in relation to the base station 401, for example on a borderline of an EZ. Generally, the maximum emission limit values stored in and output by the nominal value element 410 may be emission limit values which indicate the allowed maximum emission limit value at the respective borderlines of a respective EZ. However, other locations could be used.

In the fifth embodiment of the base station arrangement 400c shown in Fig. 4c, the comparing element 411 only and exclusively compares the measured current emission value with the maximum emission limit value output from the nominal value element 410. Correspondingly, the obtaining unit 201 only comprises the measurement unit 421 which is configured to measure the current radio frequency emission of the at least one antenna of the base station 401. Hereby, the measurement unit 421 may for example comprise a sensing test antenna, which is configured to sense the current frequency emission of all the active antennas of the base station 401. All other statements made above in relation to the base station arrangement 400a of the third embodiment shown in Fig. 4a regarding the measurement unit 421 are also true in relation to the fifth embodiment shown in Fig. 4c.

The obtaining unit 201 and the control unit 202 may generally be adapted to obtain the current emission value and to dynamically control the radio frequency emission, respectively, within a sliding time window over given length. For example, the length of the sliding time window may be equal or larger than 5 min. or smaller than or equal to 30 min. However, other time window lengths may be appropriate depending on the respective implementation.

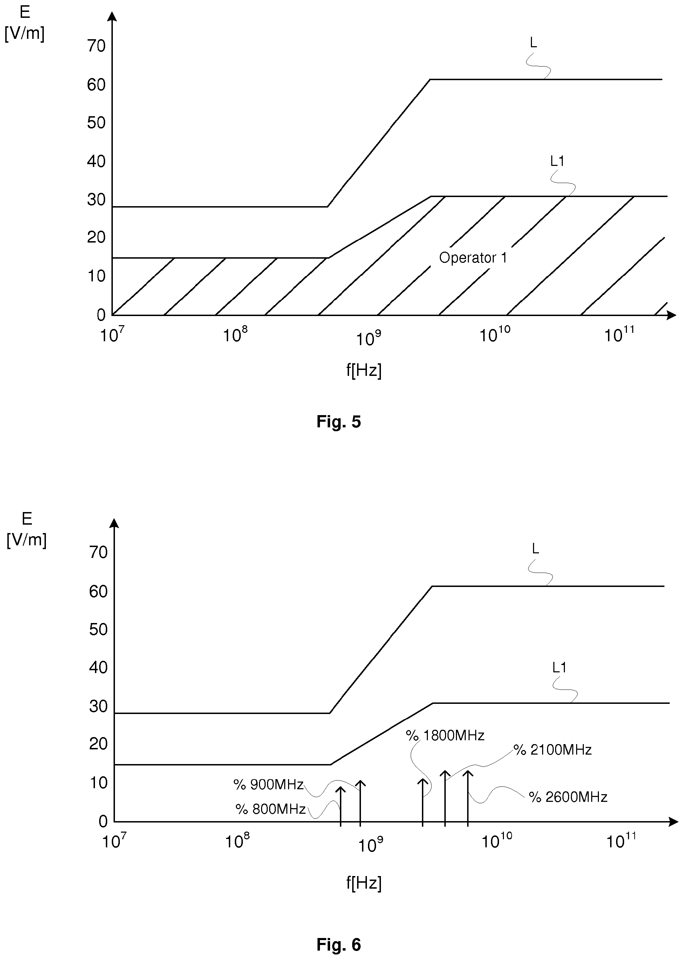

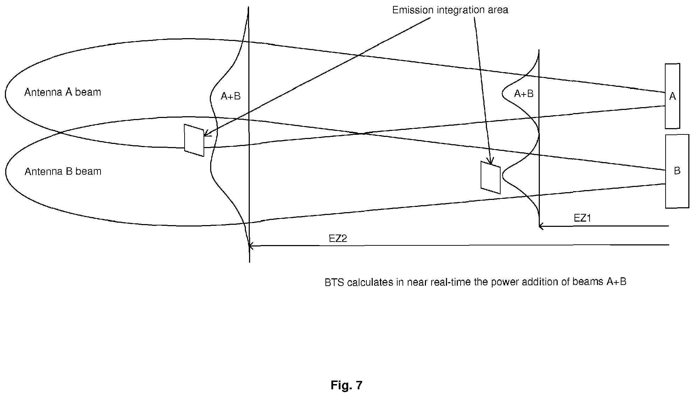

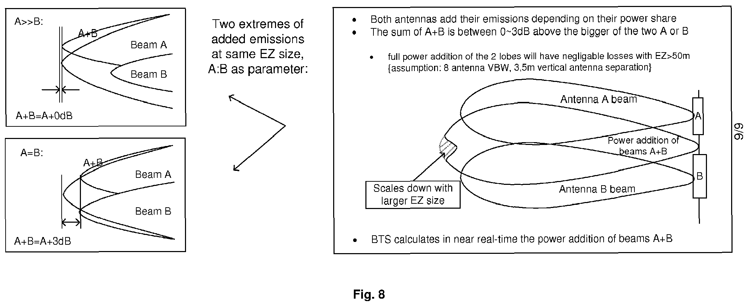

Figs. 5 and 6 present diagrams of emission values E over the frequency f with the emission limit value line L (corresponding to Fig. 1) and a situation in which the emissions at the side of one base station are shared by two operators. The emissions of the first operator, operator 1, are visualized with the line L1 in Figs. 5 and 6. This applies for example to a case in which operator 1 uses antenna A at the base station side and operator 2 uses antenna B at the base station side. In other words, both operators share the emissions within the base station location. The control element 412 of the control unit 202 of the first and the third embodiment now controls the emissions of the antennas of the base station up to the allowed emission limit value (line L) by dynamically summing the use percentage of each of the operators, operator 1 and operator 2, at each frequency. Fig. 6 shows an example in which operator 1 transmits signals in 5 different frequencies, namely at 800, 900, 1800, 2100 and 2600 mHz, wherein each frequency contributes with a certain percentage to the overall emission. Each frequency percentage is the percentage of the maximum emission limit value allowed for this specific frequency. For example, the EC Rec. 509 specifies 61 V/m as the maximum emission limit value for 2100 mHz. Thus, operator 1 may use 30,5 V/m, and the same value can be used by the co-located operator 2. Should all 5 frequency bands be equally used, each band can have up to 20 % of the band emission usage of operator 1. In such case, 6 V/m (20 % of 2100 mHz) is allowed. Here, it has to be mentioned that these maximum emission limit values are normally specified at specific locations within the base station side, for example at the borderlines of the EZ, as discussed above. In order to find the most critical locations at the EZ borderlines, i.e. the locations at which the emissions are at maximum, the following thoughts have to be considered. It has to be noted that the following thoughts, as visualized in Figs. 7 and 8, may be used to establish the emission model used in the calculating unit 420. Fig. 7 gives two examples of emission gain patterns of two antennas, antenna A and antenna B. At the location EZ 1, the gain patterns of both antennas do not overlap so that it is not necessary to add the emission values of both antennas at the location EZ 1. At the location EZ 2, the beams of antennas A and B overlap, so that the emissions of both antennas have to be added. When the calculating unit 420 calculates the total emissions at the location EZ 2, the following parameters may be taken into consideration: The EZ distance from the respective antenna, the separation between antennas A and B and/or the beamwidth of the antennas A and B. Hereby, parameter values in the horizontal and/or the vertical direction may apply (in relation to the earth surface). In case of overlapping beams, the emission ratio between the beams may impact the addition, as visualized in Fig. 8, which shows examples of how the emission values of overlapping beams of antennas A and B may be added together. As shown, antenna beam B may contribute between 0 to 3 dB depending on the share ratio between beam A and beam B. From these examples, it can be seen that the calculating unit 420 first needs to determine the most critical point of the EZ borderlines with the highest expected emission values. For this most critical point, the calculating unit 420 needs to calculate the emission contributions from all operating bands using the antenna gain diagrams and the beam share ratios. The beam share ratios and the emission values in general are calculated from expected output radio frequency power values in each frequency band. These power values for frequency band depend on the traffic volume and also on the distance between the respective antennas and the user. The calculating unit 24 then is configured to calculate these power values in real time, i.e. for example within the sliding time window as defined above.

The present invention has been described in conjunction with various embodiments as examples as well as implementations. However, other variations can be understood and effected by those persons skilled in the art and practicing the claimed invention, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

## Claims

1. Base station controller (200) for controlling the radio frequency emission of at least one antenna of a base station of a wireless communication system, comprising an obtaining unit (201) configured to obtain a current emission value of the radio frequency emission of the at least one antenna, and
a control unit (202) configured to control the radio frequency emission of the at least one antenna on the basis of the obtained current emission value;
wherein the obtaining unit (201) comprises a calculating unit (420) configured to
calculate radio frequency output power values on the basis of an emission value model for each of the at least one antennas and for each active frequency band used for each of the at least one antennas; and
calculate the current emission value of the at least one antenna on the basis of the calculated radio frequency output power values; wherein the calculating unit is further configured to convert the calculated radio frequency output power values into electric field strength values using antenna specific gain values for each frequency band.

2. The base station controller (200) according to claim 1,
wherein the control unit (202) is configured to compare the obtained current emission value with a maximum emission limit value, and to reduce the radio frequency emission at the at least one antenna if the obtained current emission value is equal to or larger than the maximum emission limit value.

3. The base station controller (200) according to claim 1 or 2,
wherein the obtaining unit (201) is configured to obtain the current emission value using all of the at least one antennas.

4. The base station controller (200) according to claim 1, 2 or 3,
wherein the obtaining unit (201) is configured to obtain the current emission value using all active frequency bands used by the at least one antenna.

5. The base station controller (200) according to claim 1,
wherein the calculating unit (420) is further configured to perform a weighted addition of the electric field strength values based on antenna gain values and/or antenna position values to obtain the current emission value.

6. The base station controller (200) according to one of the claims 1 to 5,
wherein the calculating unit (420) is configured to obtain said current emission value and said control unit is configured to dynamically control the radio frequency emission within a sliding time window of a given length.

7. The base station controller (200) according to claim 6,
wherein the given length of the sliding time window is equal to or larger than 5 min and smaller than or equal to 30 min.

8. The base station controller (200) according to one of the claims 1 to 7,
wherein the obtaining unit (201) is configured to receive a measured emission value of the current radio frequency emission of the at least one antenna as the current emission value.

9. A base station arrangement, comprising a base station with the base station controller (200) according to claim 8, and a measurement unit (421) configured to measure the current radio frequency emission of the at least one antenna of the base station and to send the measured emission value to the obtaining unit.

10. The base station arrangement according to claim 9,
wherein the measurement unit (421) comprises a sensing test antenna.

11. Method for controlling the radio frequency emission of at least one antenna of a base station of a wireless communication system, comprising the steps of obtaining a current emission value of the radio frequency emission of the at least one antenna by , and
controlling the radio frequency emission of the at least one antenna on the basis of the obtained current emission value;
wherein the current emission value is obtained by
calculating radio frequency output power values on the basis of an emission value model for each of the at least one antennas and for each active frequency band used for each of the at least one antennas; and
calculating the current emission value of the at least one antenna on the basis of the calculated radio frequency output power values by converting the calculated radio frequency output power values into electric field strength values using antenna specific gain values for each frequency band.

## Patentansprüche

1. Basisstationssteuergerät (200) zur Steuerung der Funkfrequenzemission von mindestens einer Antenne einer Basisstation eines drahtlosen Kommunikationssystems, umfassend:
eine Erhalteeinheit (201), die konfiguriert ist, um einen aktuellen Emissionswert der Funkfrequenzemission der mindestens einen Antenne zu erhalten, und
eine Steuereinheit (202), die konfiguriert ist, um die Funkfrequenzemission der mindestens einen Antenne auf der Grundlage des erhaltenen aktuellen Emissionswerts zu steuern;
wobei die Erhalteeinheit (201) eine Berechnungseinheit (420) umfasst, die konfiguriert ist, um Funkfrequenz-Ausgangsleistungswerte auf der Grundlage eines Emissionswertmodells für jede der mindestens einen Antenne und für jedes aktive Frequenzband, das für jede der mindestens eine Antenne verwendet wird, zu berechnen; und
den aktuellen Emissionswert der mindestens einen Antenne auf der Grundlage der berechneten Funkfrequenz-Ausgangsleistungswerte zu berechnen; wobei die Berechnungseinheit ferner konfiguriert ist, um die berechneten Funkfrequenz-Ausgangsleistungswerte in elektrische Feldstärkewerte unter Verwendung von antennenspezifischen Verstärkungswerten für jedes Frequenzband umzuwandeln.

2. Basisstationssteuergerät (200) nach Anspruch 1,
wobei die Steuereinheit (202) konfiguriert ist, um den erhaltenen aktuellen Emissionswert mit einem maximalen Emissionsgrenzwert zu vergleichen und die Funkfrequenzemission an der mindestens einen Antenne zu reduzieren, wenn der erhaltene aktuelle Emissionswert gleich dem oder größer als der maximale Emissionsgrenzwert ist.

3. Basisstationssteuergerät (200) nach Anspruch 1 oder 2,
wobei die Erhalteeinheit (201) konfiguriert ist, um den aktuellen Emissionswert unter Verwendung jeder der mindestens einen Antenne zu erhalten.

4. Basisstationssteuergerät (200) nach Anspruch 1, 2 oder 3,
wobei die Erhalteeinheit (201) konfiguriert ist, um den aktuellen Emissionswert unter Verwendung aller aktiven Frequenzbänder zu erhalten, die von der mindestens einen Antenne verwendet werden.

5. Basisstationssteuergerät (200) nach Anspruch 1,
wobei die Berechnungseinheit (420) ferner konfiguriert ist, um eine gewichtete Addition der elektrischen Feldstärkewerte basierend auf den Antennenverstärkungswerten und/oder Antennenpositionswerten durchzuführen, um den aktuellen Emissionswert zu erhalten.

6. Basisstationssteuergerät (200) nach einem der Ansprüche 1 bis 5,
wobei die Berechnungseinheit (420) konfiguriert ist, um den aktuellen Emissionswert zu erhalten, und die Steuereinheit konfiguriert ist, um die Funkfrequenzemission innerhalb eines gleitenden Zeitfensters einer gegebenen Länge dynamisch zu steuern.

7. Basisstationssteuergerät (200) nach Anspruch 6,
wobei die gegebene Länge des gleitenden Zeitfensters gleich oder größer als 5 Min. und kleiner als oder gleich 30 Min. ist.

8. Basisstationssteuergerät (200) nach einem der Ansprüche 1 bis 7,
wobei die Erhalteeinheit (201) konfiguriert ist, um einen gemessenen Emissionswert der aktuellen Funkfrequenzemission der mindestens einen Antenne als den aktuellen Emissionswert zu empfangen.

9. Basisstationsanordnung, umfassend eine Basisstation mit dem Basisstationssteuergerät (200) nach Anspruch 8 und eine Messeinheit (421), die konfiguriert ist, um die aktuelle Funkfrequenzemission der mindestens einen Antenne der Basisstation zu messen und den gemessenen Emissionswert an die Erhalteeinheit zu senden.

10. Basisstationsanordnung nach Anspruch 9,
wobei die Messeinheit (421) eine Testerkennungsantenne umfasst.

11. Verfahren zur Steuerung der Funkfrequenzemission von mindestens einer Antenne einer Basisstation eines drahtlosen Kommunikationssystems, umfassend die Schritte:
Erhalten eines aktuellen Emissionswerts der Funkfrequenzemission der mindestens einen Antenne durch, und
Steuern der Funkfrequenzemission der mindestens einen Antenne auf der Grundlage des erhaltenen aktuellen Emissionswerts;
wobei der aktuelle Emissionswert erhalten wird durch
Berechnen der Funkfrequenz-Ausgangsleistungswerte auf der Grundlage eines Emissionswertmodells für jede der mindestens einen Antenne und für jedes aktive Frequenzband, das für jede der mindestens eine Antenne verwendet wird; und
Berechnen des aktuellen Emissionswerts der mindestens einen Antenne auf der Grundlage der berechneten Funkfrequenz-Ausgangsleistungswerte durch Umwandeln der berechneten Funkfrequenz-Ausgangsleistungswerte in elektrische Feldstärkewerte unter Verwendung von antennenspezifischen Verstärkungswerten für jedes Frequenzband.

## Revendications

1. Dispositif de commande de station de base (200) pour commander l'émission en radiofréquence d'au moins une antenne d'une station de base d'un système de communication sans fil, comprenant :
une unité d'obtention (201) configurée pour obtenir une valeur d'émission actuelle de l'émission en radiofréquence de la ou des antennes et
une unité de commande (202) configurée pour commander l'émission en radiofréquence de la ou des antennes sur la base de la valeur d'émission actuelle obtenue ;
dans lequel l'unité d'obtention (201) comprend une unité de calcul (420) configurée :
pour calculer des valeurs de puissance de sortie en radiofréquence sur la base d'un modèle de valeur d'émission pour l'antenne ou pour chaque antenne et pour chaque bande de fréquences active utilisée pour l'antenne ou pour chaque antenne ; et
pour calculer la valeur d'émission actuelle de la ou des antennes sur la base des valeurs de puissance de sortie en radiofréquence calculées ; dans lequel l'unité de calcul est en outre configurée pour convertir les valeurs de puissance de sortie en radiofréquence calculées en valeurs d'intensité de champ électrique à l'aide de valeurs de gain spécifiques à une antenne pour chaque bande de fréquences.

2. Dispositif de commande de station de base (200) selon la revendication 1,
dans lequel l'unité de commande (202) est configurée pour comparer la valeur d'émission actuelle obtenue avec une valeur de limite d'émission maximale et pour réduire l'émission en radiofréquence au niveau de la ou des antennes si la valeur d'émission actuelle obtenue est égale ou supérieure à la valeur de limite d'émission maximale.

3. Dispositif de commande de station de base (200) selon la revendication 1 ou 2,
dans lequel l'unité d'obtention (201) est configurée pour obtenir la valeur d'émission actuelle à l'aide de la totalité de la ou des antennes.

4. Dispositif de commande de station de base (200) selon la revendication 1, 2 ou 3,
dans lequel l'unité d'obtention (201) est configurée pour obtenir la valeur d'émission actuelle à l'aide de toutes les bandes de fréquences actives utilisées par la ou les antennes.

5. Dispositif de commande de station de base (200) selon la revendication 1,
dans lequel l'unité de calcul (420) est en outre configurée pour effectuer une addition pondérée des valeurs d'intensité de champ électrique en se basant sur des valeurs de gain d'antenne et/ou des valeurs de position d'antenne pour obtenir la valeur d'émission actuelle.

6. Dispositif de commande de station de base (200) selon l'une quelconque des revendications 1 à 5,
dans lequel l'unité de calcul (420) est configurée pour obtenir ladite valeur d'émission actuelle et ladite unité de commande est configurée pour commander de manière dynamique l'émission en radiofréquence dans une fenêtre de temps coulissante d'une longueur donnée.

7. Dispositif de commande de station de base (200) selon la revendication 6,
la longueur donnée de la fenêtre de temps coulissante est égale ou supérieure à 5 min et inférieure ou égale à 30 min.

8. Dispositif de commande de station de base (200) selon l'une quelconque des revendications 1 à 7,
dans lequel l'unité d'obtention (201) est configurée pour recevoir une valeur d'émission mesurée de l'émission en radiofréquence actuelle de la ou des antennes en tant que valeur d'émission actuelle.

9. Agencement de station de base, comprenant une station de base ayant le dispositif de commande de station de base (200) selon la revendication 8, et une unité de mesure (421) configurée pour mesurer l'émission en radiofréquence actuelle de la ou des antennes de la station de base et pour envoyer la valeur d'émission mesurée à l'unité d'obtention.

10. Agencement de station de base selon la revendication 9,
dans lequel l'unité de mesure (421) comprend une antenne de test de détection.

11. Procédé pour commander l'émission en radiofréquence d'au moins une antenne d'une station de base d'un système de communication sans fil, comprenant les étapes consistant :
à obtenir une valeur d'émission actuelle de l'émission en radiofréquence de la ou des antennes et
à commander l'émission en radiofréquence de la ou des antennes sur la base de la valeur d'émission actuelle obtenue ;
dans lequel la valeur d'émission actuelle est obtenue :
en calculant des valeurs de puissance de sortie en radiofréquence sur la base d'un modèle de valeur d'émission pour l'antenne ou pour chaque antenne et pour chaque bande de fréquences active utilisée pour l'antenne ou pour chaque antenne ; et
en calculant la valeur d'émission actuelle de la ou des antennes sur la base des valeurs de puissance de sortie en radiofréquence calculées en convertissant les valeurs de puissance de sortie en radiofréquence calculées en valeurs d'intensité de champ électrique à l'aide de valeurs de gain spécifiques à une antenne pour chaque bande de fréquences.
